# EUROPÄISCHE PATENTSCHRIFT

(11) **EP 1 957 311 B1**
(45) Veröffentlichungstag und Bekanntmachung des Hinweises auf die Patenterteilung: **11.02.2015**
(21) Anmeldenummer: 06829061.8
(22) Anmeldetag: 16.11.2006
(51) Int. Cl.: B60L 5/00, B60M 1/30

(54) **HALTERUNG UND ANLAGE FÜR PROFILLEISTE IN EINER EINSCHIENENHÄNGEBAHN**
FIXTURE AND SYSTEM FOR A PROFILED STRIP IN A MONORAIL OVERHEAD CONVEYOR
ELEMENT DE FIXATION ET ARRANGEMENT POUR PROFILE DANS UN CONVOYEUR SUSPENDU MONORAIL

(30) Priorität: 25.11.2005 DE 102005056567; 15.09.2006 DE 102006043481
(43) Veröffentlichungstag der Anmeldung: 20.08.2008
(73) Patentinhaber: SEW-EURODRIVE GmbH & Co. KG, 76646 Bruchsal (DE)
(72) Erfinder: WOLF, Konstantin, 76698 Ubstadt-Weiher (DE); BECKER, Günter, 76684 Östringen (DE); SCHMIDT, Josef, 76676 Graben-Neudorf (DE)
(86) Internationale Anmeldenummer: PCT/EP2006/010988
(87) Internationale Veröffentlichungsnummer: WO 2007/059889

(56) Entgegenhaltungen:
- DE-C1- 10 122 793
- FR-A1- 2 860 756
- US-A- 6 089 512

## Beschreibung

Die Erfindung betrifft eine Halterung und eine Anlage, insbesondere EHB-Anlage.

Aus der DE 101 22 793 C1, siehe Oberbegriff des Anspruchs 1 der vorliegenden Erfindung, ist eine Halterung für eine Code-Schiene bei einer EHB bekannt. Allerdings ist die Code-Schiene aufwendig zu befestigen und umfasst nur eine Sorte von Codiersystem.

**Aus der** FR 2 860 756 A1 **ist eine Halterung für elektrische Leitungen bekannt.**

**Aus der** US 6 089 512 A **ist eine spurgeführtes Transportsystem mit System zur Übertragung von elektrischer Leistung und Daten bekannt.**

Der Erfindung liegt die Aufgabe zugrunde, eine Systemkomponenten für eine EHB-Anlage weiterzubilden, um eine einfachere und schnellere Montage der Anlage zu ermöglichen und/oder eine hohe Varianz von Anlagen mit möglichst wenig Bauteilen zu ermöglichen.

Erfindungsgemäß wird die Aufgabe bei der Halterung nach den in Anspruch 1 und bei der Anlage nach den in Anspruch 6, angegebenen Merkmalen gelöst.

Wesentliche Merkmale der Erfindung bei der Halterung sind, dass die Halterung für Profilleiste, insbesondere Codeschiene, vorgesehen ist, wobei die Halterung ein aktivierbares und/oder betätigbares Mittel zur kraftschlüssigen Verbindung, insbesondere Krallen, mit einem Trägerteil, insbesondere C-Haken, und Mittel zur formschlüssigen Verbindung, insbesondere Laschen, mit der Profilleiste umfasst.

Von Vorteil ist dabei, dass die Halterung in schneller und einfacher Weise die Befestigung einer Profilleiste ermöglicht und somit verschiedenartige Profilleisten eine Schnittstelle zur schnellen und einfachen lösbaren Verbindung geboten wird. Die Profilleisten sind jeweils mit unterschiedlichen Datenträgern oder Datenaustauschsystemen ausstattbar. Bei der Erfindung umfaßt die Halterung eine Schlagfläche zum Aktivieren und/oder Betätigen des Mittels zur kraftschlüssigen Verbindung. Von Vorteil ist dabei, dass die Halterung stabil ausgeführt ist und somit eine hohe Kraft übertragen kann.

Bei einer vorteilhaften Ausgestaltung sind die Mittel zur kraftschlüssigen Verbindung als Krallen ausgebildet, die eine Federkraft in Richtung der Normalen einer Seitenfläche der mit den Krallen in Berührung stehenden Berührfläche des Trägerteils bewirken. Von Vorteil ist dabei, dass eine stabile Verbindung herstellbar ist.

Bei einer vorteilhaften Ausgestaltung ist die Halterung einstückig aus Metall gefertigt, insbesondere als Stanz-Biege-Blech oder Stanz-Biege-Teil. Von Vorteil ist dabei, dass die Halterung kostengünstig und einfach als Massenprodukt fertigbar ist. Insbesondere sind keine Schrauben oder Nieten oder sonstigen weiteren Elemente notwendig. Die Halterung ist aus einem Stück und somit sehr stabil.

Bei einer vorteilhaften Ausgestaltung sind die Mittel zur formschlüssigen Verbindung als Laschen zur Einrastung in entsprechende Ausformungen der Profilleiste ausgebildet. Von Vorteil ist dabei, dass durch bloße Ausformung von Krallen und Laschen die Verbindungen bewirkbar sind, also sehr einfach und kostengünstig ohne Zusatzteile.

Wichtige Merkmale bei der Anlage sind, dass sie mit Trägerteil zum Befestigen einer Schiene, **wobei** am Trägerteil eine Halterung vorgesehen ist zur Befestigung einer Profilleiste. Von Vorteil ist dabei, dass eine Profilleiste in einfacher Weise verbindbar ist an die Trägerteile, die wiederum an beispielsweise Stahlträgern, wie T-Trägern, befestigbar sind.

Bei einer vorteilhaften Ausgestaltung umfasst die Profilleiste einen Informationsträger, der von einem Lesegerät eines Schienenfahrzeuges, insbesondere eines auf der Schiene bewegbaren Schienenfahrzeuges, auswertbar ist, insbesondere zur Wegerfassung oder zur Positionserfassung. Von Vorteil ist dabei, dass zusätzlich zur EHB-Schiene ein Codierträger, also die Profilleiste mit aufgebrachter Information oder mit integriertem Informationsübertragungsmittel ausführbar ist. Zusätzlich zur EHB-Schiene, welche die mechanischen Haltekräfte für den Transportwagen zur Verfügung stellt, und zusätzlich zu einer Energieversorgungsleitung, die als Schleifleitung oder als induktive Versorgung ausführbar ist, wird also mit der Profilleiste Information, insbesondere Wegerfassungsinformation oder Busteilnehmer-Information übertragbar.

Bei einer berührungslosen Übertragung wird in Schienenrichtung zumindest ein Primärleiter verlegt, der mittels Halterungen an der EHB-Schiene befestigt ist. Ein Abnehmer, umfassend eine Sekundärspule, ist induktiv gekoppelt an den Primärleiter, in welchen ein im Wesentlichen konstanter mittelfrequenter Wechselstrom eingespeist wird. Die Sekundärspule wird in Serie oder parallel mit einem Kondensator beschaltet, der derart dimensioniert ist, dass die Resonanzfrequenz der Frequenz des Wechselstromes im Primärleiter entspricht. Somit kann trotz schwacher Kopplung ein hoher Wirkungsgrad erreicht werden.

Bei einer vorteilhaften Ausgestaltung umfasst die Profilleiste ein Mittel zur Datenübertragung. Von Vorteil ist dabei, dass Informationen austauschbar sind und somit der Transportwagen beispielsweise als Busteilnehmer eines Datenbussystems betreibbar ist.

Bei einer vorteilhaften Ausgestaltung ist das Mittel zur Datenübertragung ein Leckwellenleiter, insbesondere ein Koaxialkabel mit geschlitzter Abschirmung, also Ausnehmungen in der Abschirmung. Von Vorteil ist dabei, dass die Informationsübertragung in einfacher Weise ausführbar ist.

Bei einer vorteilhaften Ausgestaltung ist an der Profilleiste eine Aufnahme zur Aufnahme des Leckwellenleiters ausgeformt. Von Vorteil ist dabei, dass ein Leckwellenleiter einbringbar ist, durch einfaches Eindrücken in die Aufnahme.

Bei einer vorteilhaften Ausgestaltung ist an der Profilleiste eine Klebefläche vorgesehen, insbesondere zum Aufkleben eines Barcode-Streifens, insbesondere zur Wegerfassung oder zur Positionserfassung. Von Vorteil ist dabei, dass Somit ist nicht nur ein einziges Codiersystem, wie WCS-Band, sondern auch mindestens ein weiteres Codiersystem verwendbar, ohne dass eine andere Profilleiste notwendig ist.

Bei einer vorteilhaften Ausgestaltung ist eine Einrastung für eine Hutschiene vorgesehen, die zum Verbinden zweier benachbarter Profilleisten vorgesehen ist. Von Vorteil ist dabei, dass eine stabile Verbindung mit kostengünstigen Massenartikeln ausführbar ist, wobei eine sehr gute Ausrichtung ausführbar ist.

Bei einer vorteilhaften Ausgestaltung umfasst die Profilleiste eine Aufnahme für eine Codierschiene und/oder ein Band, insbesondere WCS-Band. Von Vorteil ist dabei, dass dieses Band in stabiler Weise kraftschlüssig in einem Spalt einbringbar ist und stabil gehalten wird.

Bei einer vorteilhaften Ausgestaltung umfasst die Profilleiste eine als Einrastung ausgebildete Aufnahme für die Halterung, insbesondere mit Federmechanismus. Von Vorteil ist dabei, dass ein Einklipsen ausführbar ist, indem bei Überwindung eines kritischen Wertes an Federkraft ein Vorsprung überwindbar ist und somit eine formschlüssig Verbindung der Profilleiste mittels der Halterung erreichbar ist.

### Bezugszeichenliste

- 1: C-Haken
- 2: Loch
- 3: Loch
- 4: Hutschiene
- 5: Stoß
- 6: Profilleiste
- 7: Codierschiene, WCS-Band
- 8: Halterung
- 20: Schlagfläche
- 21: Laschen
- 22: Krallen
- 30: Einrastung für Stoßverbindung
- 31: Aufnahme für Leckwellenleiter
- 32: Feder
- 33: Aufnehme für WCS-Band
- 34: Einrastung
- 35: Rastung mit Federmechanismus
- 36: Klebefläche für Barcode
- 37: Leckwellenleiter

Die Erfindung wird nun anhand von Abbildungen näher erläutert:

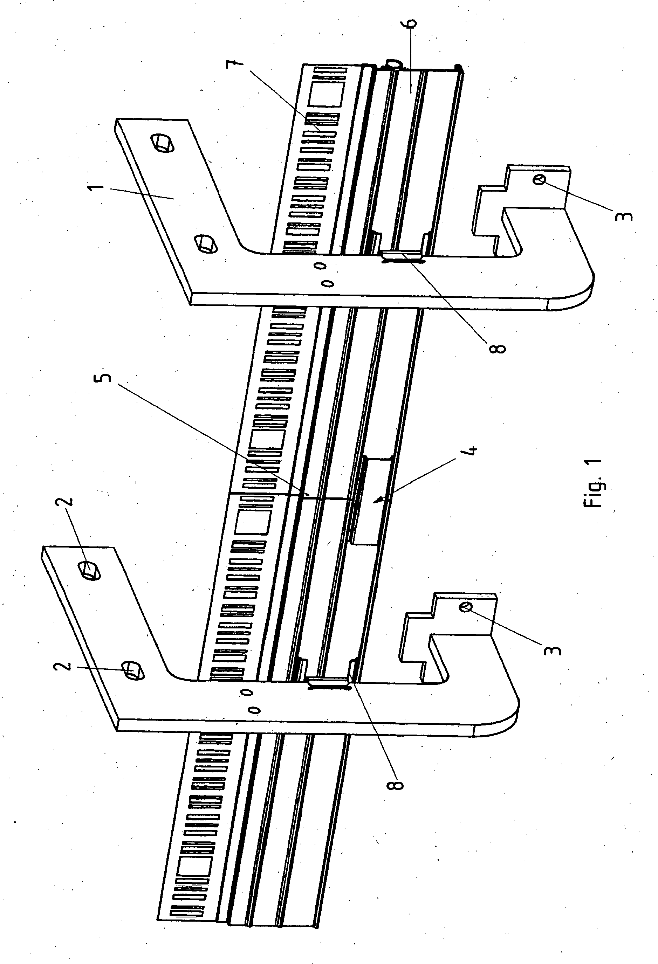

In der Figur 1 ist eine erfindungsgemäße Vorrichtung teilweise symbolisch gezeigt. Dabei ist ein C-Haken 1 gezeigt, der Löcher 2 zur Befestigung an einem Stahlträger, T-Träger oder an einer anderen Vorrichtung aufweist.

Außerdem wiest der C-Haken Löcher 3 auf, die zur Befestigung einer EHB-Schiene, also Einschienenhängebahn-Schiene, vorgesehen sind.

Die Transportwagen bewegen sich entlang der EHB-Schiene und sind mittels Rädern abgestützt beziehungsweise in Spur gehalten. Hierzu weist die EHB-Schiene entsprechende Laufflächen auf.

Außerdem ist an der Schiene entweder eine Schleifleitung oder ein Primärleiter angebracht, wobei letzterer zur induktiven also berührungslosen Energie-Versorgung der Transportwagen vorgesehen ist. Der Primärleiter wird dabei vorzugsweise mit einem mittelfrequenten Strom von 10 bis 100kHz beaufschlagt. Der Transportwagen umfasst eine Sekundärspule, die induktiv nur schwach gekoppelt ist an den Primärleiter. Trotzdem ist ein hoher Wirkungsgrad bei großem Luftspalt zwischen Primärleiter und Sekundärspule erreichbar, da der Sekundärspule eine Kapazität derart in Reihe oder parallel beschaltet ist, dass die zugehörige Resonanzfrequenz der Mittelfrequenz im Wesentlichen entspricht.

Erfindungsgemäß ist zusätzlich ein Wegerfassungssystem vorgesehen, das an den C-Haken 1 mittels der Halterung 8 verbunden ist. Das System ist mit einer elektronischen Schaltung des Transportwagens verbunden, welches wie auch der Antrieb des Wagens aus der Sekundärspule berührungslos oder über Schleifende Abnehmer mit der Schleifleitung versorgbar ist.

Hierzu weisen die Halterungen 8 Laschen für eine kraftschlüssige Verbindung, insbesondere Klemmverbindung, mit dem C-Haken 1 auf. Da beim Verbinden eine hohe Reibungskraft zu überwinden ist, weist die Halterung eine Schlagfläche auf, auf die mit einem Hammer geschlagen werden und so die Halterung auf den C-Haken geschoben werden kann. Zusätzlich weisen die Halterungen des Weiteren Krallen auf, mit denen die Profilleiste 6 an der Halterung 8 einklipsbar ist, also formschlüssig verbindbar ist.

In Längsrichtung, also in Schienenrichtung der EHB, werden benachbarte Profilleisten 6 an der Stoßstelle 5 mittels einem Stück Hutschiene 4 verbunden. Hierzu weist das Profil der Profilleiste entsprechende Ausformungen auf.

Die Profilleiste 6 taugt zum Anbringen mindestens eines Informationsträgers oder Informationsübertragers. Bei der in den Figuren gezeigten Ausführungsvariante sind sogar mehrere solche Mittel verbindbar.

Erstens lässt sich im oberen Bereich der Profilleiste 6 eine Codierschiene 7, beispielsweise ein WCS-Band einschieben. Diese Codierschiene weist also Ausnehmungen auf, deren Abfolge in Schienenrichtung derart ausgeführt ist, dass ein Wegmesssystem realisierbar ist. Hierzu weist der Transportwagen einen Sensor auf, der die Ausnehmungen detektiert und daraus die Position und/oder die Geschwindigkeit ermittelt.

Zweitens lässt sich ein Leckwellenleiter einbringen, der an Ausnehmungen seiner Abschirmung etwas elektromagnetische Strahlung abstrahlt und somit zum Datenaustausch verwendbar ist. Hierzu weist der Transportwagen eine Antenne auf, die nahe über dem Leckwellenleiter entlang gefahren wird. Dabei werden Frequenzen mit mehr als 1 MHz vorteilhaft verwendet. Der Leckwellenleiter ist auch mit in Schienenrichtung voneinander beabstandeten Schlitzen ausführbar, womit dann auch eine Streckenerfassung und/oder Positionierung ausführbar ist. Bei einer weiteren Ausführungsvariante sind die Abstände auch in der Art der Ausnehmungen des WCS-Bandes ausführbar.

Drittens ist auch ein Barcode-Aufkleber auf eine Klebefläche klebbar, die von einem entsprechenden Lesegerät detektierbar und auswertbar ist.

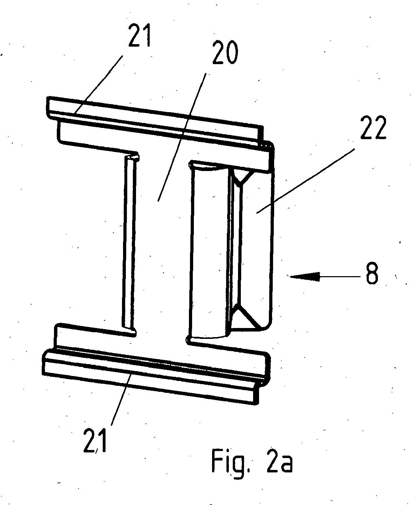

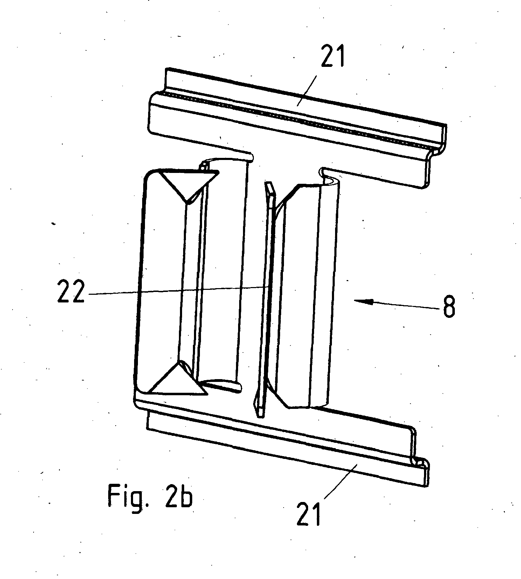

In der Figur 2a ist die Halterung 8 näher gezeigt. In der Figur 2b ist die Halterung 8 näher gezeigt. Dabei ist eine Schlagfläche 20 zum Bedienen mit einem Hammer gezeigt. Bei dieser Betätigung werden die Krallen 22 auf den C-Haken 1 geschoben. Mit den Laschen 21 der Halterung 8 ist die Profilleiste formschlüssig verbindbar, also einklipsbar.

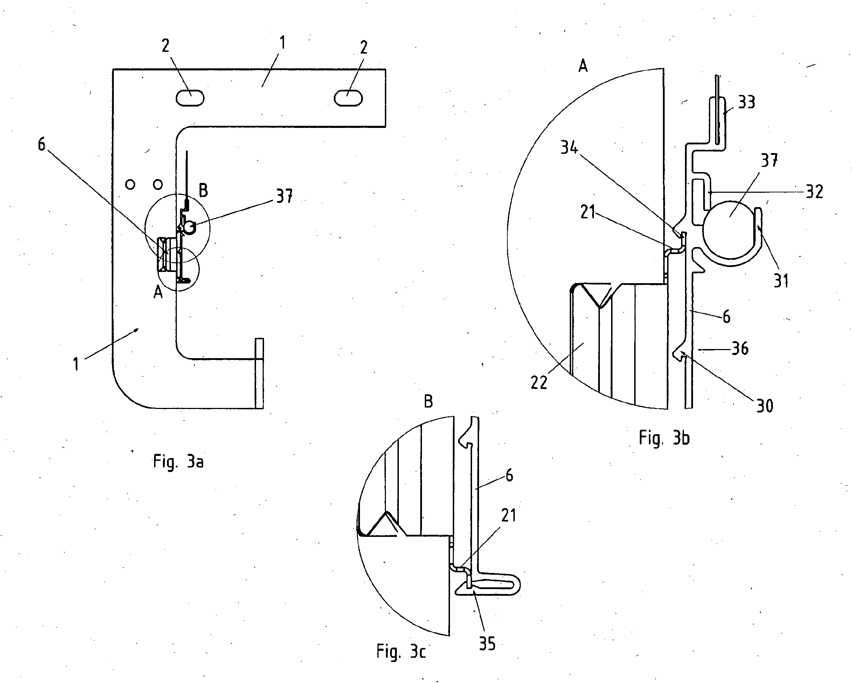

In der Figur 3a ist ein Schnitt durch die erfindungsgemäße Anordnung gezeigt, wobei in Figur 3b und Figur 3c Ausschnitte vergrößert dargestellt sind.

Die Einrastung 30 ist für die Stoßverbindung mittels der Hutschiene 4 vorgesehen. Die Profilleiste 6 weist darüber hinaus eine Aufnahme 31 für den Leckwellenleiter 37 auf, der nach dem Einführen in die Aufnahme 31 mit einer Feder 32 in dieser gehalten ist. Die Aufnahme 33 für WCS-Band ist derart beschaffen, dass das Band von oben einschiebbar ist und darin zumindest kraftschlüssig gehalten ist. Die Einrastung 34 ist für die formschlüssige Verbindung mit den Laschen 21 vorgesehen. Die Rastung 35 ist mit Federmechanismus vorgesehen, an welchem die Laschen 21 der Halterung 6 einrastbar sind. Die Profilleiste weist außerdem eine Fläche auf, die als Klebefläche 36 für Barcode verwendbar ist.

## Patentansprüche

1. Halterung (8) für Profilleiste (6), insbesondere Codeschiene, wobei
die Halterung ein aktivierbares und/oder betätigbares Mittel zur kraftschlüssigen Verbindung, insbesondere Krallen (22)
mit einem Trägerteil, insbesondere C-Haken (1), aufweist,
**dadurch gekennzeichnet, dass** die Halterung (8)
Mittel zur formschlüssigen Verbindung, insbesondere Laschen (21), mit der Profilleiste **aufweist**,
**wobei die Halterung eine Schlagfläche (20) aufweist zum Aktivieren und/oder Betätigen des Mittels (22) zur kraftschlüssigen Verbindung.**

2. Halterung nach Anspruch 1,
**dadurch gekennzeichnet, dass**
die Mittel zur kraftschlüssigen Verbindung als Krallen ausgebildet sind, die eine Federkraft in Richtung der Normalen einer Seitenfläche der mit den Krallen in Berührung stehenden Berührfläche des Trägerteils bewirken.

3. Halterung nach mindestens einem der vorangegangenen Ansprüche,
**dadurch gekennzeichnet, dass**
die Halterung einstückig aus Metall gefertigt ist, insbesondere als Stanz-Biege-Blech oder Stanz-Biege-Teil.

4. Halterung nach mindestens einem der vorangegangenen Ansprüche,
**dadurch gekennzeichnet, dass**
die Mittel zur formschlüssigen Verbindung als Laschen zur Einrastung in entsprechende Ausformungen der Profilleiste ausgebildet sind.

5. Halterung nach mindestens einem der vorangegangenen Ansprüche,
**dadurch gekennzeichnet, dass**
das Trägerteil an einer Schiene, insbesondere EHB-Schiene, vorgesehen ist, an der auch ein Primärleiter zur berührungslosen Energieübertragung an ein auf der Schiene bewegbar angeordnetes Schienenfahrzeug vorgesehen ist, insbesondere wobei das Fahrzeug eine mit dem Primärleiter induktiv gekoppelte Sekundärspule umfasst, der eine Kapazität in Reihe oder parallel beschaltet ist, wobei die zugehörige Resonanzfrequenz der Mittelfrequenz des in den Primärleiter eingespeisten Stromes im Wesentlichen entspricht.

6. Anlage
mit Trägerteil (1) zum Befestigen einer Schiene
**dadurch gekennzeichnet, dass**
am Trägerteil eine Halterung **nach mindestens einem der vorangegangenen Ansprüche** vorgesehen ist zur Befestigung einer Profilleiste.

7. Anlage nach Anspruch 6 mit einer Profilleiste (6), **dadurch gekennzeichnet, dass**
die Profilleiste einen Informationsträger (7) umfasst, der von einem Lesegerät eines Schienenfahrzeuges, insbesondere eines auf der Schiene bewegbaren Schienenfahrzeuges, auswertbar ist, insbesondere zur Wegerfassung oder zur Positionserfassung.

8. Anlage nach Anspruch 6 mit einer Profilleiste (6) oder nach Anspruch 7,
**dadurch gekennzeichnet, dass**
die Profilleiste ein Mittel zur Datenübertragung umfasst.

9. Anlage nach Anspruch 8,
**dadurch gekennzeichnet, dass**
das Mittel zur Datenübertragung ein Leckwellenleiter ist, insbesondere ein Koaxialkabel mit geschlitzter Abschirmung, also Ausnehmungen in der Abschirmung.

10. Anlage nach Anspruch 9,
**dadurch gekennzeichnet, dass**
an der Profilleiste eine Aufnahme zur Aufnahme des Leckwellenleiters ausgeformt ist.

11. Anlage nach Anspruch 6 mit einer Profilleiste (6) oder nach mindestens einem der vorangegangenen Ansprüche, 7-10
**dadurch gekennzeichnet, dass**
an der Profilleiste eine Klebefläche vorgesehen ist, insbesondere zum Aufkleben eines Barcode-Streifens, insbesondere zur Wegerfassung oder zur Positionserfassung.

12. Anlage nach Anspruch 6 mit einer Profilleiste (6) oder nach mindestens einem der vorangegangenen Ansprüche 7-10,
**dadurch gekennzeichnet, dass**
eine Einrastung für eine Hutschiene vorgesehen ist, die zum Verbinden zweier benachbarter Profilleisten vorgesehen ist.

13. Anlage nach Anspruch 6 mit einer Profilleiste (6) oder nach mindestens einem der vorangegangenen Ansprüche 7-12, **dadurch gekennzeichnet, dass**
die Profilleiste eine Aufnahme für eine Codierschiene und/oder ein Band, insbesondere WCS-Band, umfasst.

14. Anlage nach Anspruch 6 mit einer Profilleiste (6) oder nach mindestens einem der vorangegangenen Ansprüche 7-14, **dadurch gekennzeichnet, dass**
die Profilleiste eine als Einrastung ausgebildete Aufnahme für die Halterung umfasst, insbesondere mit Federmechanismus.

## Claims

1. A mount (8) for a shaped strip (6), in particular a code rail, wherein
the mount has activatable and/or operable means, in particular claws (22), for force-locked connection to a bearer part, in particular a C-hook (1),
**characterized in that** the mount (8)
has means, in particular lugs (21), for form-locked connection to the shaped strip,
wherein the mount has an impact surface (20) for activation and/or operation of the means (22) for force-locked connection.

2. A mount according to claim 1, **characterized in that** the means for force-locked connection are in the form of claws which effect an elastic force in the direction of the normal of a lateral surface of the contact surface, in contact with the claws, of the bearer part.

3. A mount according to at least one of the preceding claims, **characterized in that** the mount is manufactured in one piece from metal, in particular as a stamped-bent sheet or a stamped-bent part.

4. A mount according to at least one of the preceding claims, **characterized in that** the means for form-locked connection are in the form of lugs for engagement in appropriate formations of the shaped strip.

5. A mount according to at least one of the preceding claims, **characterized in that** the bearer part is provided on a rail, in particular an EMS rail, on which there is also provided a primary conductor for contactless energy transmission to a rail vehicle movably arranged on the rail, in particular wherein the vehicle comprises a secondary coil inductively coupled to the primary conductor, a capacitor being wired to the secondary coil in series or in parallel, wherein the associated resonant frequency substantially corresponds to the medium frequency of the current fed into the primary conductor.

6. A system with a bearer part (1) for securing a rail
**characterized in that**
a mount according to at least one of the preceding claims is provided on the bearer part in order to secure a shaped strip.

7. A system according to claim 6 with a shaped strip (6),
**characterized in that** the shaped strip comprises an information carrier (7) which can be evaluated, in particular for path determination or for position determination, by a reader of a rail vehicle, in particular a rail vehicle movable on the rail.

8. A system according to claim 6 with a shaped strip (6) or according to claim 7,
**characterized in that**
the shaped strip comprises a means for data transmission.

9. A system according to claim 8,
**characterized in that**
the means for data transmission is an optical waveguide, in particular a coaxial cable with slotted shield, therefore cut-outs in the shield.

10. A system according to claim 9,
**characterized in that**
a receiver to receive the optical waveguide is formed at the shaped strip.

11. A system according to claim 6 with a shaped strip (6) or according to at least one of the preceding claims 7-10,
**characterized in that**
an adhesive surface is provided on the shaped strip, in particular for the sticking on of a barcode strip, in particular for path determination or for position determination.

12. A system according to claim 6 with a shaped strip (6) or according to at least one of the preceding claims 7-10,
**characterized in that**
there is provided an engagement for a DIN rail to connect two adjacent shaped strips.

13. A system according to claim 6 with a shaped strip (6) or according to at least one of the preceding claims 7-12,
**characterized in that**
the shaped strip comprises a receiver for a coding rail and/or a band, in particular WCS band.

14. A system according to claim 6 with a shaped strip (6) or according to at least one of the preceding claims 7-14,
**characterized in that**
the shaped strip comprises a receiver, in the form of an engagement, for the mount, in particular with spring mechanism.

## Revendications

1. Elément de retenue (8) destiné à une barrette profilée (6), en particulier à un rail codé,
ledit élément de retenue comportant un moyen activable et/ou actionnable, dévolu à la liaison par engagement positif et se présentant notamment comme des griffes (22),
et une partie de support, notamment un crochet (1) en C,
**caractérisé par le fait que**
l'élément de retenue (8) est muni de moyens se présentant notamment comme des pattes (21) et dévolus à la liaison avec la barrette profilée, par complémentarité de formes,
ledit élément de retenue étant doté d'une surface de frappe (20) dédiée à l'activation et/ou à l'actionnement du moyen (22) de liaison par engagement positif.

2. Elément de retenue selon la revendication 1,
**caractérisé par le fait que**
les moyens, dévolus à la liaison par engagement positif, sont réalisés sous la forme de griffes développant une force élastique dans la direction de la perpendiculaire à une face latérale de la surface de contact de la partie de support qui est en contact avec lesdites griffes.

3. Elément de retenue selon au moins l'une des revendications précédentes,
**caractérisé par le fait que**
ledit élément de retenue est fabriqué en métal, d'un seul tenant, en particulier sous la forme d'une tôle poinçonnée et pliée ou d'une pièce poinçonnée et pliée.

4. Elément de retenue selon au moins l'une des revendications précédentes,
**caractérisé par le fait que**
les moyens, dévolus à la liaison par complémentarité de formes, sont réalisés en tant que pattes conçues pour s'encliqueter dans des profilages correspondants de la barrette profilée.

5. Elément de retenue selon au moins l'une des revendications précédentes,
**caractérisé par le fait que**
la partie de support est prévue sur un rail, en particulier un rail de piste monorail suspendue sur lequel un conducteur primaire est également prévu pour la transmission d'énergie, sans contact, à un véhicule ferroviaire agencé avec mobilité sur ledit rail, sachant notamment que ledit véhicule inclut une bobine secondaire qui est couplée par induction audit conducteur primaire, et avec laquelle un condensateur est branché en série ou en parallèle, la fréquence de résonance associée correspondant alors, pour l'essentiel, à la fréquence moyenne du courant introduit dans ledit conducteur primaire.

6. Installation
équipée d'une partie de support (1) dévolue à la fixation d'un rail,
**caractérisée par le fait**
**qu'**un élément de retenue, conforme à au moins l'une des revendications précédentes, est prévu sur la partie de support pour assurer la fixation d'une barrette profilée.

7. Installation selon la revendication 6, munie d'une barrette profilée (6),
**caractérisée par le fait que**
la barrette profilée inclut un support d'informations (7) pouvant être interprété par un appareil de lecture d'un véhicule ferroviaire, en particulier d'un véhicule ferroviaire mobile sur le rail, notamment en vue de la détection de courses ou de la détection d'emplacements.

8. Installation selon la revendication 6, munie d'une barrette profilée (6), ou selon la revendication 7,
**caractérisée par le fait que**
la barrette profilée inclut un moyen dévolu à la transmission de données.

9. Installation selon la revendication 8,
**caractérisée par le fait que**
le moyen dévolu à la transmission de données est un guide d'ondes de fuite, en particulier un câble coaxial à blindage fendu, c'est-à-dire comportant des évidements dans ledit blindage.

10. Installation selon la revendication 9,
**caractérisée par le fait**
**qu'**un logement, destiné à recevoir le guide d'ondes de fuite, est ménagé sur la barrette profilée.

11. Installation selon la revendication 6, munie d'une barrette profilée (6), ou selon au moins l'une des revendications précédentes 7-10,
**caractérisée par le fait**
**qu'**une surface adhésive est prévue sur la barrette profilée, en particulier pour le collage d'une bande à code à barres, notamment en vue de la détection de courses ou de la détection d'emplacements.

12. Installation selon la revendication 6, munie d'une barrette profilée (6), ou selon au moins l'une des revendications précédentes 7-10,
**caractérisée par**
la présence d'un système de crantage, dédié à un profilé chapeau prévu pour la liaison de deux barrettes profilées voisines.

13. Installation selon la revendication 6, munie d'une barrette profilée (6), ou selon au moins l'une des revendications précédentes 7-12,
**caractérisée par le fait que**
la barrette profilée inclut un logement dédié à un rail de codage et/ou à une bande, en particulier à une bande affectée au service de communications sans fil.

14. Installation selon la revendication 6, munie d'une barrette profilée (6), ou selon au moins l'une des revendications précédentes 7-13,
**caractérisée par le fait que**
la barrette profilée inclut un logement réalisé sous la forme d'un système de crantage dédié à l'élément de retenue et pourvu, en particulier, d'un mécanisme à ressort.
